# EUROPÄISCHE PATENTSCHRIFT

(11) **EP 1 107 414 B1**
(45) Veröffentlichungstag und Bekanntmachung des Hinweises auf die Patenterteilung: **27.07.2005**
(21) Anmeldenummer: 00250409.0
(22) Anmeldetag: 29.11.2000
(51) Int. Cl.: H02H 3/247

(54) **Verfahren zur Unterspannungs-Ueberwachung einer Netzspannung und Unterspannungsausloeser**
Method for monitoring undervoltage of the mains voltage and undervoltage release device
Méthode de surveillance de la sous-tension du réseau et déclencheur à manque de tension

(30) Priorität: 07.12.1999 DE 19959775
(43) Veröffentlichungstag der Anmeldung: 13.06.2001
(73) Patentinhaber: SIEMENS AKTIENGESELLSCHAFT, 80333 München (DE)
(72) Erfinder: Pancke, Andreas, 13507 Berlin (DE); Rehaag, Hans, 16341 Zepernick (DE); Roehl, Wolfgang, 13503 Berlin (DE)

(56) Entgegenhaltungen:
- DE-A- 19 507 936
- US-A- 4 025 823
- US-A- 4 679 116

## Beschreibung

Die Erfindung betrifft ein Verfahren zur Unterspannungs-Überwachung einer Netzspannung mit einem Magneten zur Betätigung eines Leistungsschalters, einer die Netzspannung überwachenden Schwellwertschaltung, mit der der Haltestrom des Magneten bei Unterspannung des Netzes auf einen geringeren Haltestrom gesteuert wird, wobei letzterer durch einen Ladekondensator gestützt wird, und durch die ein Zeitglied angesteuert wird, nach dessen Zeitablauf bei bleibender Unterspannung ein Aus-Signal für den Magneten des Leistungsschalters erfolgt. Die Erfindung betrifft weiter einen nach dem Verfahren arbeitenden Unterspannungsauslöser.

Ein nach diesem Prinzip arbeitender Unterspannungsauslöser ist aus EP-B 0 811 266 bekannt.

Unterspannungsauslöser werden in elektrischen Anlagen eingesetzt, um Verbraucher zu schützen, die bei einer Spannungsabsenkung im Netz Schaden nehmen könnten. Damit nicht jeder kurzzeitige Spannungseinbruch zum Ausschalten des Verbrauchers führt, wird die Auslösung kurzzeitig, z. B. um 3 s, verzögert.

Damit der Haltestrom auch während der Verzögerungszeit, in der möglicherweise die Netzspannung völlig unterbrochen ist, aufrechterhalten werden kann, wird er einmal durch einen Ladekondensator gestützt, der in der dem Magneten zugeordneten Treiberschaltung enthalten ist, und er wird zum anderen, um anderen, um wiederum diesen Ladekondensator klein halten zu können, in seinem Wert herabgesetzt.

Nach der bereits erwähnten Lösung nach EP-B 0 811 266 wird der Magnet dazu in Reihe mit einem Schalttransistor betrieben, der beim Anzug und im normalen Haltebetrieb so getaktet wird, daß der Strom durch den Magneten im wesentlichen konstant gehalten wird. Im Verzögerungsfall wird zu dem Magneten ein höherer Widerstand als bei Anzug und im Haltebetrieb in Reihe geschaltet. Die Spannung dieser jeweils in Reihe mit dem Magneten geschalteten Widerstände stellt gleichzeitig einen Referenzwert für die Konstantstromregelung dar. Der Haltestrom wird so auf einen wesentlich geringeren Mittelwert heruntergeregelt als der Anzugsstrom.

Ein Leistungsschalter mit Unterspannungsauslöser und Konstantstromregelung ist auch aus US 4 025 823 bekannt. Hier werden allerdings keine Maßnahmen für eine Verzögerung und eine Herabsetzung des Stromes in der Verzögerungszeit ausgewiesen.

Aus Sicherheitsgründen wurde bisher darauf verzichtet, bei Unterspannungsauslösern den Haltestrom gegenüber dem Anzugsstrom herabzusetzen, wie das an sich für Magnete seit langem bekannt ist, siehe beispielsweise die US 4 679 116. Bei einem herabgesetzten Haltestrom war bei den hier betroffenen Leistungsschaltern zu befürchten, daß der Leistungsschalter bei Erschütterungen der elektrischen Anlage ausschaltet, weil der Magnet den Schaltmechanismus dann nicht mehr halten kann. Ein Betrieb mit gleichbleibend hohem Strom in der Größe des Anzugsstromes bedeutet jedoch, daß die Magneten thermisch für diesen Strom ausgelegt sein müssen und daß ständig eine erhebliche Verlustleistung erzeugt wird. Der Erfindung liegt die Aufgabe zugrunde, ein Verfahren und einen Unterspannungsauslöser anzugeben, mit denen die Verlustleistung der Auslösemagnete von Leistungsschaltern mit Unterspannungsauslösung gesenkt und die der Unterspannungsauslöser klein gebaut werden kann.

Erfindungsgemäß wird die Aufgabe gelöst durch die Merkmale der Ansprüche 1 und 5. Zweckmäßige Ausgestaltungen sind Gegenstand der Unteransprüche.

Danach werden der Haltestrom auf einen Bruchteil des Anzugsstromes und der Strom während der Verzögerungszeit bei Unterspannung auf einen Bruchteil des Haltestromes reduziert.

Überraschend wurde nämlich gefunden, daß sich der Haltestrom auf einen Wert herabsetzen läßt, bei dem eine ausreichende Kontaktkraft auch bei Erschütterungen aufrechterhalten wird. Da der Strom quadratisch in die Verlustleistung eingeht, ist so im Haltebetrieb eine Leistungsreduzierung auf 1/16 der Anzugsverlustleistung möglich. Während der Verzögerungszeit läßt sich eine weitere Verlustleistungsreduzierung auf ca. 1/400 der Anzugsverlustleistung erreichen.

Damit kann die Kondensatorkapazität, die zur Aufrechterhaltung des Stromes während der Verzögerungszeit nötig ist, wesentlich verringern. Außerdem muß bezüglich der Abführung der Verlustleistung und der thermischen Auslegung der Magnete weniger Aufwand betrieben werden.

Der Anzugsstrom kann ggf. durch eine kontinuierliche oder getaktete Regelung begrenzt werden.

Der Haltestrom wird zweckmäßig durch Takten auf einen Strommittelwert von etwa 1/4 des Anzugsstromes begrenzt. Während der Verzögerungszeit wird der Strom weiter auf etwa 1/20 des Anzugsstromes verringert, wobei bei diesem Betrieb bewußt auf Erschütterungsfestigkeit des Schalters verzichtet wird.

Ein geeigneter Unterspannungsauslöser ist nach der Erfindung so aufgebaut, daß der Ausgang der Schwellwertschaltung über einen Widerstand mit parallel geschaltetem Kondensator und ein einen Stromsollwert während der Verzögerungszeit vorgebender Ausgang des Zeitgliedes an den zweiten Eingang des Konstantstromreglers geführt sind.

Durch die Spannung am Eingang des Konstantstromreglers wird der Sollwert des Stroms vorgegeben, der durch den Magneten fließt. Beim Einschalten wird durch den Kondensator am Ausgang der Schwellwertschaltung eine hohe Spannung auf den Eingang des Konstantstromreglers übertragen, so daß der Magnet mit hohem Strom anzieht. Nach Abklingen der Kondensatorspannung wird über den Widerstand am Ausgang der Schwellwertschaltung ein geringerer Stromsollwert vorgegeben als für den Anzug des Magneten. Bei Unterspannung wird über das Zeitglied während einer Verzögerungszeit dann ein weitere Sollwertreduzierung vorgenommen.

Eine Besonderheit der Lösung ist die Aufrechterhaltung eines Überwachungsstromes bei einem Notaus, wie im folgenden Ausführungsbeispiel noch zu erklären sein wird.

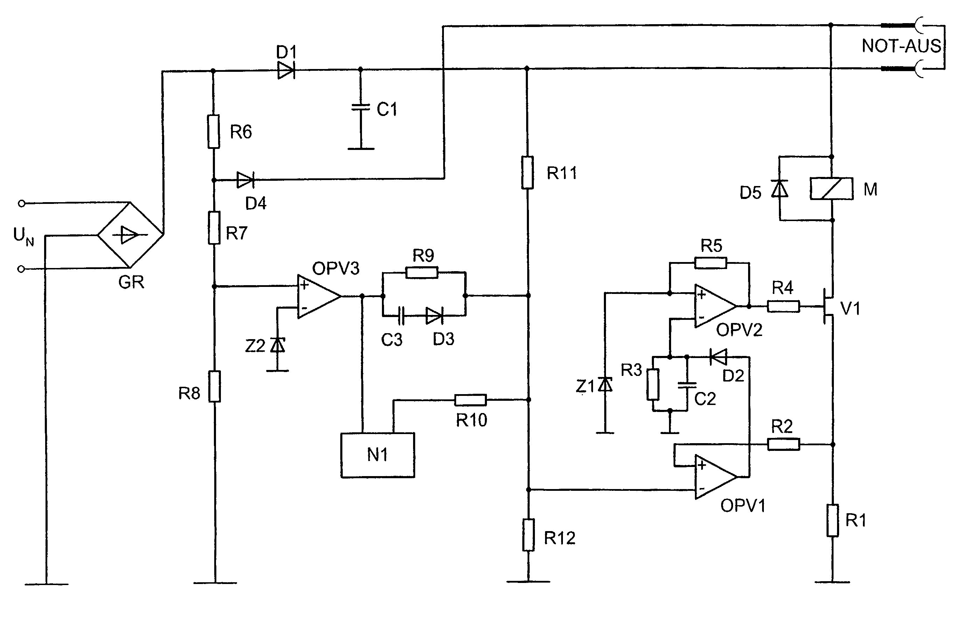

Die Zeichnung zeigt eine mögliche Schaltungsvariante für einen Unterspannungsauslöser.

Die Netzspannung U_{N} oder eine netzproportionale Spannung wird mit einem Brückengleichrichter gleichgerichtet. Die Gleichspannung speist einen Magneten M eines Leistungsschalters. Über eine Diode D1 wird mit der Gleichspannung gleichzeitig ein Ladekondensator C1 aufgeladen.

In Reihe mit dem Magneten M sind ein elektronischer Schalter V1 und ein Strommeßwiderstand R1 geschaltet. Der elektronische Schalter V1 wird durch einen Konstantstromregler angesteuert, der in bekannter Weise aus den Operationsverstärkern OPV1 und OPV2 gebildet wird. Der Operationsverstärker OPV1 erhält über den Widerstand R2 an seinem Plus-Eingang ein Signal für den Istwert des Stromes und an seinem Minus-Eingang ein Signal für den Sollwert des Stromes.

Die Regelung erfolgt durch taktweises Ansteuern des Operationsverstärkers OPV2, bewirkt durch ein aus einem Widerstand R3 und einem Kondensator C2 bestehendes Zeitglied, an den der Ausgang des des Operationsverstärkers OPV1 über eine Diode D2 geschaltet ist.

Die Gleichspannung wird am Eingang der Schaltung über einen Spannungsteiler, bestehend aus den Widerständen R6, R7, R8, geteilt und einem Komparator OPV3 zugeführt. Der Ausgang des Komparators OPV3 ist über eine Parallelschaltung eines Widerstandes R9 mit einem Kondensator C3 und einer Diode D3 mit dem Sollwerteingang des Konstantspannungsreglers OPV1/OPV2 verbunden. Außerdem ist der Ausgang des Komparators an einen Zeitbaustein N1 geführt, dessen Ausgang über einen Widerstand R10 ebenfalls an den Sollwerteingang des Konstantstromreglers geführt ist.

Beim Einschalten des Magneten M mit einer über dem Ansprechwert des Komparators OPV3 liegenden Spannung wird der positive Ausgangsimpuls des Komparators OPV3 durch den Kondensator C3 unmittelbar auf den Sollwerteingang des Konstantstromreglers übertragen und damit ein hoher Stromsollwert vorgegeben. Der Magnet M zieht mit vollem Strom bei aufgesteuertem elektronischen Schalter V1 an.

Mit abklingender Spannung am Kondensator C3 erfolgt die weitere Stromsollwertvorgabe über den Widerstand R9, der so gewählt ist, daß der Haltestrom gegenüber dem Anzugsstrom auf 1/4 verringert wird.

Stellt der Komparator OPV3 eine Unterspannung an seinem Eingang fest, so erreicht er seinen Schaltpunkt. Sein Ausgang erhält einen Negativimpuls, der den Zeitbaustein N1 anstößt, der während einer eingestellten Verzögerungszeit, in der Regel ca. 3 s, den Stromsollwert über den Widerstand R10 weiter senkt. Gegenüber dem Anzugsstrom kann der Strom in der Verzögerungsphase etwa auf 1/20 gesenkt werden.

Während der Verzögerungszeit wird der Strom durch den Magneten M ggf. durch die Ladung des Ladekondensators C1 aufrechterhalten.

Nach Ablauf der Verzögerungszeit bei bleibender Unterspannung entfällt auch die Stromsollwertvorgabe durch den Zeitbaustein N1, der Schalter löst aus.
Steigt die Netzspannung wieder über den Schaltpunkt des Komparators OPV3, so wird erneut ein erhöhter Stromsollwert für den Anzugsstrom vorgegeben, so daß der Magnet wieder anziehen kann.

Der Magnet M kann auch durch Öffnen der Notaus-Kontakte betätigt werden. Um in diesem fall eine Wiedereinschaltung beim Schließen der Notaus-Kontakte zu ermöglichen, wurde ein weiterer Stromweg über den Widerstand R6 und eine Diode D4 geschaffen, der das Fließen eines geringen Überwachungs-stromes durch die Magnetspule erlaubt. Der elektronische Schalter V1 bleibt in diesem Betriebszustand aufgesteuert, wofür dem Konstantstromregler über einen Spannungsteiler R11/R12 ein Sollwert vorgegeben wird. Es wird so ein Überwachungsstrom im Milliampere-Bereich aufrechterhalten. Der Überwachungsstrom bildet einen Nebenschluß zu den Widerständen R7, R8, so daß die Eingangsspannung am Komparator OPV3 unter die Schaltspannung sinkt und somit Unterspannung simuliert wird. Beim Schließen der Notaus-Kontakte wird so ein erneuter Anzugsimpuls ausgelöst und der Leistungsschalter wieder eingeschaltet.

Der Überwachungsstrom fließt auch bei einer Unterspannungsauslösung weiter durch den Magneten M, sofern eine - verringerte - Gleichspannung vorhanden ist. Da der Überwachungsstrom sehr klein ist, hat er für den Betrieb des Leistungsschalters außer bei einem Notaus keinerlei Bedeutung.

## Patentansprüche

1. Verfahren zur Unterspannungs-Überwachung einer Netzspannung mit einem Magneten zur Betätigung eines Leistungsschalters, einer die Netzspannung überwachenden Schwellwertschaltung, mit der der Haltestrom des Magneten bei Unterspannung des Netzes auf einen geringeren Haltestrom gesteuert wird, wobei letzterer durch einen Ladekondensator gestützt wird, und durch die ein Zeitglied angesteuert wird, nach dessen Zeitablauf bei bleibender Unterspannung ein Aus-Signal für den Magneten des Leistungsschalters erfolgt, **dadurch gekennzeichnet, daß** der Haltestrom auf einen Bruchteil des Anzugsstromes und der Strom während der Verzögerungszeit bei Unterspannung auf einen Bruchteil des Haltestromes reduziert wird.

2. Verfahren nach Anspruch 1,
**dadurch gekennzeichnet ,**
**daß** die Stromreduzierung durch Takten eines mit dem Magneten in Reihe geschalteten elektronischen Schalters bewirkt wird.

3. Verfahren nach Anspruch 2,
**dadurch gekennzeichnet,**
**daß** der elektronische Schalter konstantstromgeregelt wird.

4. Verfahren nach einem der Ansprüche 1 bis 3,
**dadurch gekennzeichnet,**
**daß** nach einer Notausschaltung des Magneten der Stromfluß durch den Magneten mit einem nicht für das Halten des Magnetankers ausreichenden Überwachungsstrom aufrechterhalten und an der Schwellwertschaltung Unterspannung simuliert wird.

5. Unterspannungsauslöser zur Überwachung einer Netzspannung (U_{N}) mit einem von einer netzproportionalen Gleichspannung versorgten Magneten (M) zur Betätigung eines Leistungsschalters,
einer die Netzspannung (U_{N}) anhand der netzproportionalen Gleichspannung überwachenden Schwellwertschaltung (OPV3), einer mit dem Ausgang der Schwellwertschaltung (OPV3) verbundenen Zeitglied (N1),
einem mit der netzproportionalen Gleichspannung beaufschlagten Ladekondensator (C1)
und einem über einen Konstantstromregler (OPV1, OPV2) geregelten elektronischen Schalter (V1) in Reihe mit dem Magneten (M), wobei die an einem in Reihe mit dem Magneten (M) und dem elektronischen Schalter (V1) geschalteten Widerstand (R1) abgenommene Spannung an einen ersten Eingang des Konstantstromreglers (OPV1, OPV2) und der Ausgang des Zeitgliedes (N1) an den zweiten Eingang des Konstantstromreglers (OPV1,OPV2) geführt ist,
zur Durchführung des Verfahrens nach einem der Ansprüche 1 bis 4, **dadurch gekennzeichnet,**
**daß** der Ausgang der Schwellwertschaltung (OPV3) über einen Widerstand (R9) mit parallel geschaltetem Kondensator(C3) und ein einen Stromsollwert während der Verzögerungszeit vorgebender Ausgang des Zeitgliedes (N1) an den zweiten Eingang des Konstantstromreglers (OPV1, OPV2) geführt sind.

6. Unterspannungsauslöser nach Anspruch 5,
**dadurch gekennzeichnet,**
**daß** eine über eine Diode (D4) von einem an der netzproportionalen Gleichspannung liegenden Spannungsteiler (R6, R7, R8), von dem auch die Eingangsspannung des Schwellwertschalters (OPV3) abgenommen ist, abgegriffene Spannung über einen Notaus-Unterbrechungsschalter an den Magneten (M) geführt ist und der zweite Eingang des Konstantstromreglers (OPV1, OPV2) mit der an einem an der netzproportionalen Gleichspannung liegenden Spannungsteiler (R11, R12) abgenommenen Spannung beaufschlagt ist.

## Claims

1. Method for undervoltage monitoring of a mains voltage using a magnet for the purpose of actuating a circuit breaker and a threshold value circuit, which monitors the mains voltage and with which the holding current of the magnet is kept to a relatively low holding current in the case of an undervoltage in the network, said holding current being assisted by a charging capacitor, and by means of which threshold value circuit a timing element is driven, on the basis of whose time sequence an Off signal for the magnet of the circuit breaker takes place in the case of a lasting undervoltage, **characterized in that** the holding current is reduced to a fraction of the pick-up current, and the current during the delay time in the case of an undervoltage is reduced to a fraction of the holding current.

2. Method according to Claim 1, **characterized in that** the current reduction is brought about by clocking of an electronic switch which is connected in series with the magnet.

3. Method according to Claim 2, **characterized in that** the electronic switch is regulated at a constant current.

4. Method according to one of Claims 1 to 3, **characterized in that**, following emergency disconnection of the magnet, the current flow through the magnet is maintained by a monitoring current which is not sufficient for holding the magnet armature, and undervoltage is simulated at the threshold value circuit.

5. Undervoltage release for the purpose of monitoring a mains voltage (U_{N}) having a magnet (M), which is supplied by a mains-proportional DC voltage, for the purpose of actuating a circuit breaker,
a threshold value circuit (OPV3), which monitors the mains voltage (U_{N}) on the basis of the mains-proportional DC voltage, a timing element (N1), which is connected to the output of the threshold value circuit (OPV3),
a charging capacitor (C1), which has the mains-proportional DC voltage applied to it,
and an electronic switch (V1), which is regulated by means of a constant-current regulator (OPV1, OPV2), in series with the magnet (M), the voltage, which is tapped off at a resistor (R1) which is connected in series with the magnet (M) and the electronic switch (V1), being supplied to a first input of the constant-current regulator (OPV1, OPV2) and the output of the timing element (N1) at the second input of the constant-current regulator (OPV1, OPV2), for the purpose of carrying out the method according to one of Claims 1 to 4, **characterized in that** the output of the threshold value circuit (OPV3) is passed, via a resistor (R9) having a parallel-connected capacitor (C3), and an output of the timing element (N1), which prescribes a desired current value during the delay time, is passed to the second input of the constant-current regulator (OPV1, OPV2).

6. Undervoltage release according to Claim 5, **characterized in that** a voltage, which is tapped off via a diode (D4) by a voltage divider (R6, R7, R8), which is at the mains-proportional DC voltage and by means of which the input voltage of the threshold value switch (OPV3) is also tapped off, is passed to the magnet (M) via an emergency-off interrupter, and the voltage which is tapped off at a voltage divider (R11, R12), which is at the mains-proportional DC voltage, is applied to the second input of the constant-current regulator (OPV1, OPV2).

## Revendications

1. Procédé pour surveiller le manque de tension d'un réseau à l'aide d'un aimant d'actionnement d'un disjoncteur et d'un montage à valeur de seuil, qui surveille la tension de réseau, et règle le courant de maintien de l'aimant pour que le courant de maintien soit plus petit lorsque le réseau est en manque de tension, le courant de maintien étant assisté par un condensateur de charge, et par lequel un relais temporisateur est excité, un signal d'arrêt pour l'aimant du disjoncteur étant produit s'il reste un manque de tension après que la temporisation s'est écoulée,
**caractérisé en ce que** le courant de maintien est réduit à une fraction du courant d'attraction et, pendant la temporisation en cas de manque de tension, le courant est réduit à une fraction du courant de maintien.

2. Procédé selon la revendication 1, **caractérisé en ce que** le courant est réduit en synchronisant un commutateur électronique monté en série avec l'aimant.

3. Procédé selon la revendication 2, **caractérisé en ce que** le commutateur électronique est réglé pour produire un courant constant.

4. Procédé selon l'une des revendications 1 à 3, **caractérisé en ce que**,
après que l'aimant a été mis hors circuit d'urgence, le flux de courant à travers l'aimant est maintenu à l'aide d'un courant de surveillance qui n'est pas suffisant pour maintenir l'induit de l'aimant et
un manque de tension est simulé sur le montage à valeur de seuil.

5. Déclencheur à manque de tension pour surveiller une tension de réseau (U_{N}) pour exécuter le procédé selon l'une des revendications 1 à 4, comportant
un aimant (M) alimenté en une tension continue proportionnelle au réseau d'actionnement d'un disjoncteur,
un montage à valeur de seuil (OPV3) qui surveille la tension de réseau (U_{N}) à l'aide de la tension continue proportionnelle au réseau,
un relais temporisateur (N1) relié à la sortie du montage à valeur seuil (OPV3),
un condensateur de charge (C1) alimenté par la tension continue proportionnelle au réseau et
un commutateur électronique (V1) réglé par l'intermédiaire d'un régulateur de courant constant (OPV1, OPV2) et monté en série avec l'aimant (M),
dans lequel la tension prélevée sur une résistance (R1) montée en série avec l'aimant (M) et le commutateur électronique (V1) est acheminée à une première entrée du régulateur de courant constant (OPV1, OPV2) et la sortie du relais temporisateur (N1) est acheminée à la deuxième entrée du régulateur de courant constant (OPV1, OPV2),
**caractérisé en ce que**, à la deuxième entrée du régulateur de courant constant (OPV1, OPV2), sont appliquées
la sortie du montage de valeur seuil (OPV3) par l'intermédiaire d'une résistance (R9) comportant un condensateur (C3) monté en parallèle et
une sortie du relais temporisateur (N1) qui donne une valeur de consigne de courant pendant la temporisation.

6. Déclencheur à manque de tension selon la revendication 5, **caractérisé en ce que**
une tension prélevée au moyen d'une diode (D4) par un diviseur de tension (R6, R7, R8), soumis à la tension continue proportionnelle au réseau et sur lequel est aussi prélevée la tension d'entrée du commutateur de valeur seuil (OPV3), est acheminée par l'intermédiaire d'un interrupteur d'urgence à l'aimant (M) et
la deuxième entrée du régulateur de courant constant (OPV1, OPV2) est alimentée par la tension prélevée sur un diviseur de tension (R11, R12) soumis à la tension continue proportionnelle au réseau.
